# EUROPÄISCHE PATENTANMELDUNG

(11) **EP 1 069 411 A1**
(43) Veröffentlichungstag der Anmeldung: **17.01.2001**
(21) Anmeldenummer: 00114588.7
(22) Anmeldetag: 07.07.2000
(51) Int. Cl.: G01F 23/296

(54) **Anordnung zur kontinuierlichen Füllstandsmessung in Kraftstoffbehältern**

(30) Priorität: 10.07.1999 DE 19932344
(71) Anmelder: SONOTEC Dr. zur Horst-Meyer und Münch OHG, 06112 Halle (DE)
(72) Erfinder: Fritsche, Tobias, Dr.-Ing., 06114 Halle (DE); Zur Horst-Meyer, Santer, Dr., 06120 Halle (DE); John, Ronald, 06124 Halle (DE); Krause, Werner, 06114 Halle (DE); Münch, Hans-Joachim, 06130 Halle (DE)
(74) Vertreter: Pauling, Hans-Jürgen

(57) **Zusammenfassung**

Die Anordnung besteht aus einem, außerhalb des Behälters angeordneten, Ultraschallwandler - verbunden mit einer Ansteuer- und Auswerteschaltung sowie einem im Behälter befindlichen Schallführungsrohr, wobei das Schallführungsrohr aus dem Material des Kraftstoffbehälters besteht und zusätzliche Reflektoren aufweist.

## Beschreibung

Die Erfindung betrifft eine Anordnung zur kontinuierlichen Füllstandsmessung in Kraftstoffbehältern, insbesondere solchen aus Kunststoffen, nach dem Ultraschall-Echo-Prinzip.

Die Kontrolle des Füllstandes in Kraftstoffbehältern erfolgt nach dem bekannten Stand der Technik üblicherweise mit mechanischen Schwimmern, die mit elektronischen Schaltungsanordnungen verbunden sind.
Bekannt ist weiterhin die Nutzung des Ultraschall-Echo-Prinzips zur Kontrolle des Füllstandes in Behältern verschiedener Ausführungen. Dazu werden Schaltungsanordnungen verwendet, die mit am Behälterboden oder an der Behälterwandung angebrachten Ultraschallwandlern die von der Oberfläche des jeweiligen Mediums reflektierenden Schallimpulse aufnehmen und auswerten, wie in DE 3241033 A1 und DE 4025326 A1 offenbart ist.
Weiterhin sind Anordnungen mit in die Flüssigkeit eintauchenden Ultraschallsonden z.B. aus der DE 3912783 A1 bekannt.
Ferner sind in den DE 3330059 A1 und DE 3431774 A1 Ultraschallsensoren im Behälter, die mit einem sogenannten Schallführungsrohr verbunden sind, beschrieben.
Aus der DE 3912783 A1 ist auch eine Füllstandsmessvorrichtung für Kraftstofftanks mit einer schwingungsfähigen Anordnung bekannt.

Alle diese bekannten Vorrichtungen bzw. Anordnungen, insbesondere solche - die in die Flüssigkeit eintauchen -, können die aktuellen und künftigen Anforderungen an die Sicherheit von Kraftstoffbehältern und an die Verminderung von Emissionen aus solchen Behältern nicht mit Sicherheit erfüllen.

Darüber hinaus erhöhen sich künftig unter Beachtung der Qualitätsstandards für gehobene Kraftfahrzeuge die Anforderungen an die Füllstandsmessung in Kraftstoffbehältern bzw. -tanks. Es wird derzeit und auch künftig eine ständige, sehr genaue Anzeige des Füllstandes in den Kraftfahrzeugtanks - auch bei sehr unregelmäßiger Gestaltung der Kraftstoffbehälter - gefordert.

Der Erfindung liegt deshalb die Aufgabe zu Grunde, ohne zusätzliche Öffnung im Behälter, eine Anordnung zur kontinuierlichen, genauen Füllstandsmessung in Kraftstoffbehältern, insbesondere solchen aus Kunststoff mit unregelmäßiger Gestaltung, zu entwickeln.

Die Erfindung löst diese Aufgabe durch die kennzeichnenden Merkmale des Patentanspruches 1.
Wesentlich für die Erfindung ist dabei die Anordnung des Ultraschallwandlers 1 außerhalb des Behälters in Kombination mit einem Schallführungsrohr 1 im Behälter, mit zusätzlichen Reflektoren 22. Damit können im Bedarfsfall weitere Ultraschall-Echo-Anordnungen - z.B. als Referenzstrecke - realisiert werden. Ein weiterer wichtiger Bestandteil der erfindungsgemäßen Anordnung ist die Ansteuer- und Auswerteschaltung 4. Die erfindungsgemäße Anordnung ermöglicht mit geringem Aufwand eine ständige Anzeige des Füllstandes im Kraftstoffbehälter mit hoher Genauigkeit. Sie ist unempfindlich gegen Bewegungen, insbesondere solche mit überhöhtem Neigungswinkel und Erschütterungen des Kraftstoffbehälters.

Vorteilhafte Ausführungen der Erfindung sind Gegenstand der Patentansprüche 2 bis 9. Nach einer ersten Ausführung ist gemäß Patentanspruch 4 ein senkrechtes Schallführungsrohr mit dazugehöriger Anordnung des Ultraschallwandlers vorgesehen.
Weitere vorteilhafte Ausführungsformen sind rechtwinklige Gestaltungen bzw. gekrümmte Gestaltungen des Schallführungsrohres 2 und der korrespondierenden Anordnung des Ultraschallwandlers 1 gemäß den Patentansprüchen 5 und 6.

Eine weitere Ausgestaltung der Erfindung besteht in der Festlegung der Messzyklen nach den kennzeichnenden Merkmalen des Patentanspruches 7.
Eine Verbesserung der Erfindung, insbesondere für den praktischen Gebrauch, ist im Patentanspruch 8 angegeben. Durch eine geeignete Schaltungsanordnung wird eine präzise Anzeige des Füllstandes ermöglicht.
Weitere Vorteile bzw. Anwendungsmöglichkeiten der vorliegenden Erfindung ergeben sich aus der nachfolgenden Beschreibung anhand von möglichen vorteilhaften Ausführungsformen - dargestellt in den Zeichnungen.

Es zeigt
- Fig. 1 -: eine Ausführungsform mit einem senkrechten Schallführungsrohr
- Fig. 2 -: eine Ausführungsform mit einem rechtwinkligen Schallführungsrohr
- Fig. 3 -: eine Ausführungsform mit einem gekrümmten Schallführungsrohr

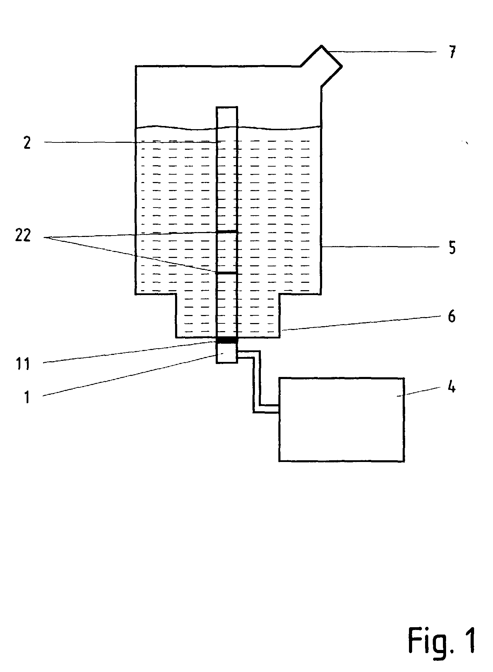

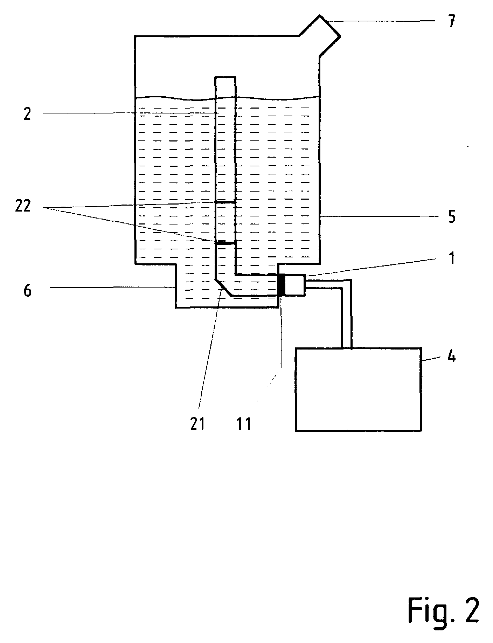

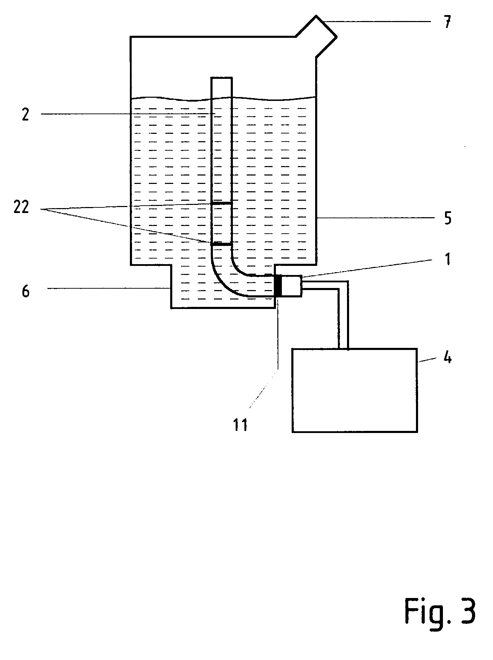

In den Zeichnungen wird schematisch ein Kraftstoffbehälter mit seiner Wandung 5 , einer tiefsten Stelle des Behälters 6 und seinem Einfüllstutzen 7 dargestellt. Mit 1 ist jeweils der außen am Behälter angebrachte Ultraschallwandler gezeichnet, der eine Anpassungsschicht 11 aufweist. Das im Kraftstoffbehälter angeordnete Schallführungsrohr ist mit 2 und die und/oder am Rohr angebrachten Reflektoren sind mit 22 gezeichnet. Mit 21 wird auf die Reflektionsfläche gem. Fig. 2 hingewiesen. Die zur erfindungsgemäßen gehörende Ansteuer- und Auswerteschaltung ist mit 4 gezeichnet.
Im Ultraschallwandler 1 ist eine an sich bekannte Anpassungsschicht 11 enthalten, die zur Transformation der unterschiedlichen Impedanzen erforderlich ist. Die Anordnung des Ultraschallwandlers 1 an der Behälterwandung 5 muss so erfolgen, dass zwischen Behälterwandung und Wandler kein Luftspalt entsteht, d.h. vorteilhafterweise durch Verklebung u.ä. Verfahren. Die Ultraschallwandler werden vorzugsweise außen an der tiefsten Stelle des Kraftstoffbehälters angeordnet. Bei der senkrechten Anordnung des Schallführungsrohres gem. Fig. 1 muss die Totzeit des Wandlers bei der Füllstandsmessung berücksichtigt werden. Bei den vorteilhaften Ausführungsformen gem. den Figuren 2 und 3 wird der Ultraschallwandler rechtwinklig am Boden des Kraftstoffbehälters angeordnet.
Die Schallgeschwindigkeit im Behälter ist abhängig von verschiedenen Faktoren, insbesondere von Art und Temperatur des jeweiligen Mediums. Es werden deshalb von den Ultraschallwandler je nach Art des Kraftstoffes unterschiedliche Frequenzbereiche verwendet.
Bei Vergaserkraftstoff ist dies ein Frequenzbereich von 0,5 - 10 MHz. Bei Dieselkraftstoffen umfasst der Bereich Arbeitsfrequenzen von 0,5 - 2 MHz.

Eine bevorzugte Ausführung der erfindungsgemäßen Anordnung enthält eine zusätzliche Schutzumhüllung des Wandlers mit geeignetem, vorzugsweise thermoplastischen Material, welches mit der Behälterwandung verbunden werden kann.

Das mit 2 bezeichnete - an sich bekannte - Schallführungsrohr weist ein oder mehrere Ausgleichsöffnungen auf, die gewährleisten, dass sich das Rohr nach dem Prinzip der kommunizierenden Röhren auch mit Kraftstoff füllt.
Dieses Rohr 2 kann, gemäß den Figuren 1 bis 3, unterschiedlich gestaltet sein. Vorteilhaft sind dabei - die rechtwinklige Ausführungsform gem. Fig. 2, wobei die äußere Seite der rechtwinkligen Ausführung - d.h. nahe dem Behälterboden als glatte Reflektionsfläche 21 gestaltet ist. Diese Fläche 21 kann je nach Anwendungsfall auch zusätzlich beschichtet werden.
Die vorteilhafte Ausführungsform gem. Fig. 3 besteht zweckmäßig aus einem biegsamen Rohr, welches durch geeignete Befestigungen im Kraftstoffbehälter gehalten wird. Vorzugsweise ist das Schallführungsrohr 2 Bestandteil des Kraftstoffbehälters, d.h. es ist bei der Herstellung des Behälters - z.B. im Spritzgussverfahren mit integriert. Das Schallführungsrohr besteht also aus dem gleichen, üblicherweise thermoplastischen Kunststoff wie übliche Kraftstoffbehälter. Im und/oder am Schallführungsrohr 2 sind in definierten Abständen zum Behälterboden geeignete Schallreflektoren 22, z.B. in Form von Drähten oder Metallstegen, angeordnet. Damit wird die Schaffung weiterer Ultraschall-Echo-Anordnungen ermöglicht, mit den physikalische Eigenschaften von Kraftstoffen u.ä. ermittelt werden können.

Die Ansteuer- und Auswerteschaltung 4 enthält neben an sich üblichen Schaltungsanordnungen eine Begrenzungsschaltung zur Festlegung eines Toleranzbereiches um einen mittleren Erwartungswert sowie Speicher- und Optimierungsschaltung zur Erfassung aller angefallenen Messwerte und zur Ermittlung eines Mittelwertes.
Diese erfindungsgemäßen zusätzlichen Schaltungen können auch ohne Auswand durch geeignete Programmierung der üblichen Auswerteschaltung erfolgen.

Alle beschriebenen und/oder bildlich dargestellten Merkmale bilden für sich oder in beliebiger sinnvoller Kombination den Gegenstand der vorliegenden Erfindung, auch unabhängig von ihrer Zusammenfassung in den Ansprüchen oder deren Rückbeziehung.

Weitere naheliegende Ausführungsformen liegen im Rahmen der Erfindung und führen aus den Schutzbereich der Ansprüche nicht heraus.

## Patentansprüche

1. Anordnung zur kontinuierlichen Füllstandsmessung in Kraftstoffbehältern, insbesondere solchen aus Kunststoff, nach dem Ultraschall-Echo-Prinzip, bestehend aus einem außerhalb des Behälters angeordneten Ultraschallwandler - verbunden mit einer Ansteuer- und Auswerteschaltung - sowie einem im Behälter befindlichen Schallführungsrohr mit Ausgleichsöffnungen, dadurch gekennzeichnet, dass der Ultraschallwandler 1 eine Anpassungsschicht 11 aufweist, das Schallführungsrohr 2 aus dem Material des Kraftstoffbehälters besteht und zusätzlich im und/oder am Schallführungsrohr Reflektoren 22 aufweist, mit der weitere Ultraschall-Echo-Anordnungen realisiert werden.

2. Anordnung gemäß Anspruch 1, dadurch gekennzeichnet, dass der Ultraschallwandler außerhalb an der tiefsten Stelle des Kraftstoffbehälters angeordnet ist.

3. Anordnung gemäß Anspruch 1, dadurch gekennzeichnet, dass das Schallführungsrohr 2 Teil des Kraftstoffbehälters ist.

4. Anordnung gemäß Anspruch 1, dadurch gekennzeichnet, dass das Schallführungsrohr 2 im Kraftstoffbehälter senkrecht angeordnet ist.

5. Anordnung gemäß Anspruch 1, dadurch gekennzeichnet, dass das Schallführungsrohr 2 rechtwinklig gestaltet ist und im rechten Winkel eine Reflektionsfläche unter einem Winkel von 45 Grad ausweist.

6. Anordnung gemäß Anspruch 1, dadurch gekennzeichnet, dass das Schallführungsrohr 2 aus einem biegsamen Rohr besteht und gekrümmt verlegt wird.

7. Anordnung gemäß Anspruch 1, dadurch gekennzeichnet, dass der Messzyklus der Anordnung nach der Beziehung (Behälterhöhe: Schallgeschwindigkeit) x 20 festgelegt wird.

8. Anordnung gemäß Anspruch 1, dadurch gekennzeichnet, dass die Auswertungsund Anzeigeschaltung eine Begrenzungsschaltung zur Festlegung eines Toleranzbereiches um einen mittleren Erwartungswert sowie einer Speicher- und Optimierungsschaltung zur Erfassung aller angefallenen Messwerte und zur Ermittlung eines Mittelwertes enthält.

9. Anordnung gemäß Anspruch 1, dadurch gekennzeichnet, dass der Ultraschallwandler mit einer Schutzumhüllung umgeben ist.
